# EUROPÄISCHE PATENTSCHRIFT

(11) **EP 3 350 383 B1**
(45) Veröffentlichungstag und Bekanntmachung des Hinweises auf die Patenterteilung: **18.03.2020**
(21) Anmeldenummer: 16767218.7
(22) Anmeldetag: 14.09.2016
(51) Int. Cl.: E04B 1/90, B32B 5/18, B32B 5/24, B32B 15/04, E04B 1/80, E04B 1/76, E04F 13/04, B32B 5/02, B32B 7/12, B32B 5/32, B32B 27/06, B32B 27/12, B32B 27/30

(54) **DÄMMPLATTE UND DÄMMANORDNUNG**
INSULATION PANEL AND INSULATION ARRANGEMENT
PLAQUE D'ISOLATION ET SYSTÈME D'ISOLATION

(30) Priorität: 16.09.2015 DE 202015104913 U
(43) Veröffentlichungstag der Anmeldung: 25.07.2018
(73) Patentinhaber: Schlüter-Systems KG, 58640 Iserlohn (DE)
(72) Erfinder: Schlüter, Werner, 58644 Iserlohn (DE)
(74) Vertreter: Schröter & Albrecht Patentanwälte PartG mbB
(86) Internationale Anmeldenummer: PCT/EP2016/071692
(87) Internationale Veröffentlichungsnummer: WO 2017/046162

(56) Entgegenhaltungen:
- EP-A1- 0 017 050
- WO-A1-02/38879
- DE-A1- 3 445 187
- DE-C1- 4 321 877
- DE-U1- 9 113 436
- DE-U1- 20 003 804
- NL-C- 1 037 258

## Beschreibung

Die vorliegende Erfindung betrifft die Verwendung einer Dämmplatte zur Herstellung einer Dämmanordnung.

Dämmplatten zum thermischen und/oder akustischen Dämmen eines Untergrunds, insbesondere einer Gebäudewand, umfassend eine erste Dämmschicht aus geschäumtem Kunststoff, welche eine Oberseite der Dämmplatte definiert, sind im Stand der Technik in unterschiedlichsten Ausgestaltungen bekannt. Sie werden unter anderem dazu eingesetzt, Untergründe, wie beispielsweise Gebäudewände thermisch und/oder akustisch zu dämmen. In der einfachsten Ausgestaltung sind Dämmplatten einteilig aus geschäumtem Kunststoff hergestellt und weisen eine ebene Unterseite und eine ebene Oberseite auf. Zur Dämmung einer Gebäudewand werden die Dämmplatten in einem ersten Schritt an dieser befestigt, wobei die Befestigung unter Verwendung eines Klebemörtels und/oder unter Verwendung von Dübeln erfolgen kann, um nur einige Beispiele zu nennen. In einem weiteren Schritt kann dann auf die Dämmplatten eine erste Schicht eines Putzmörtels aufgetragen werden, der dann mit einem Spachtel geglättet wird. Auf die geglättete erste Putzschicht wird dann ein Bewehrungsgitter gedrückt, um die Putzschicht zu stabilisieren. Anschließend erfolgt der Auftrag einer weiteren Putzschicht, welche nach Bedarf ebenfalls geglättet werden kann.

Ein Nachteil bei der Herstellung einer Dämmanordnung unter Verwendung von Dämmplatten der zuvor beschriebenen Art besteht darin, dass diese sehr aufwendig ist.

Weitere Dämmplatten sind in den Druckschriften NL 1 073 258 C, DE 200 03 804 U1, DE 34 45 187 A1, WO 02/38879 A1 und DE 43 21 877 C1 beschrieben.

DE 91 13 436 U1 offenbart die Verwendung einer Dämmplatte zur Herstellung einer Dämmanordnung, wobei es sich bei der Dämmplatte um eine solche zum thermischen und/oder akustischen Dämmen eines Untergrunds handelt und die Dämmplatte eine erste Dämmschicht aus geschäumtem Kunststoff , welche eine Oberseite der Dämmplatte definiert und auswärts weisende, mit Hinterschneidungen versehene Vorsprünge aufweist, die in einer regelmäßigen Anordnung vorgesehen sind, eine Dampfsperrschicht und an der der Oberseite gegenüberliegenden Unterseite eine Vlies- oder Gewebeschicht umfasst, und wobei die Dämmanordnung einen Untergrund, mehrere der Dämmplatten, die mit ihrer Unterseite an dem Untergrund befestigt sind und diesen bedecken, und eine Mörtelschicht aufweist, die auf die Oberseite der Dämmplatten aufgetragen ist.

Ausgehend von diesem Stand der Technik ist es eine Aufgabe der vorliegenden Erfindung, eine Dämmplatte sowie eine Dämmplattenanordnung mit alternativem Aufbau zu schaffen. Zur Lösung dieser Aufgabe schlägt die vorliegende Erfindung vor, eine Dämmplatte zur Herstellung einer Dämmanordnung gemäß Anspruch 1 zu verwenden. Ein wesentlicher Vorteil derart ausgebildeter Vorsprünge besteht darin, dass ein auf die Oberseite der Dämmplatte aufgetragener Mörtel die zwischen den Vorsprüngen vorhandenen Zwischenräume und damit auch die Hinterschneidungen füllt, wodurch eine mechanische Befestigung des Mörtels an den Vorsprüngen beziehungsweise an der Dämmplatte erzielt wird. Entsprechend kann auf den Einsatz eines zusätzlichen Bewehrungsgitters verzichtet werden, so dass gegenüber dem eingangs beschriebenen Stand der Technik ein Verfahrensschritt entfällt. Entsprechend können Aufwand und Kosten eingespart werden.

Gemäß einer Ausgestaltung der vorliegenden Erfindung ist die erste Dämmschicht aus einem thermoplastischen Kunststoff hergestellt. Derartige thermoplastische Kunststoffe weisen sehr gute Dämmeigenschaften auf.

Vorteilhaft ist die erste Dämmschicht aus Polystyrol, Polyurethan oder Piocelan hergestellt ist, insbesondere mittels Extrusion oder Aufschäumen in einer Form, womit im Rahmen von Versuchen sehr gute Ergebnisse erzielt wurden. Insbesondere lässt sich die Materialdichte bei der Herstellung der ersten Dämmschicht gezielt einstellen, so dass sich die gewünschten thermischen und/oder akustischen Dämmeigenschaften und/oder die Druckstabilität der ersten Dämmschicht in einfacher Art und Weise realisieren lassen.

Vorteilhaft sind mindestens 4 Vorsprünge pro dm² vorgesehen, bevorzugt mindestens 10 Vorsprünge pro dm². Entsprechend kann eine sehr gute Befestigung des Mörtels an der Oberseite der Dämmplatte gewährleistet werden.

Gemäß einer Ausgestaltung der vorliegenden Erfindung weisen die Vorsprünge in Draufsicht eine mehreckige Form auf, insbesondere eine quadratische oder achteckige Forminsbesondere eine quadratische oder achteckige Form, wobei im letzteren Fall die Vorsprünge bevorzugt vier paarweise einander gegenüberliegende längere Seitenkanten und vier paarweise einander gegenüberliegenden kürzere Seitenkanten aufweisen, wobei die kürzeren Seitenkanten benachbart angeordneter Vorsprünge vorteilhaft zueinander weisen.

Erfindungsgemäß weist die Dämmplatte zumindest eine weitere Dämmschicht aus geschäumtem Kunststoff aufweist, die bevorzugt direkt mit der ersten Dämmschicht verbunden ist, wobei sich die weitere Dämmschicht von der ersten Dämmschicht hinsichtlich des Materials und/oder hinsichtlich der Materialdichte unterscheidet. Mit einer solchen weiteren Dämmschicht kann sichergestellt werden, dass die Dämmplatte sehr gute thermische Dämmeigenschaften und/oder sehr gute akustische Dämmeigenschaften und/oder eine sehr gute Druckstabilität aufweist.

Die weitere Dämmschicht ist bevorzugt aus einem thermoplastisch verarbeiteten Kunststoff hergestellt.

Vorteilhaft ist die weitere Dämmschicht aus Polystyrol hergestellt, insbesondere aus extrudiertem oder in einer Form aufgeschäumtem Polystyrol.

Die erste Dämmschicht und die weitere Dämmschicht können getrennt voneinander hergestellt und anschließend miteinander verbunden werden, beispielsweise unter Verwendung eines Klebstoffes. Bevorzugt werden sie jedoch gemeinsam extrudiert oder gemeinsam in einer entsprechenden Form aufgeschäumt.

Erfindungsgemäß weist die Dämmplatte eine Dampfsperrschicht auf, die insbesondere aus einer Folie, bevorzugt aus einer Metallfolie hergestellt ist.

Gemäß der vorliegenden Erfindung weist die Dämmplatte an ihrer der Oberseite gegenüberliegenden Unterseite eine Vlies- oder Gewebeschicht auf. Eine solche Vlies- oder Gewebeschicht kann als Haftvermittlerschicht die Befestigung der erfindungsgemäßen Dämmplatte an einem Untergrund erleichtern und verbessern.

Bevorzugt weist die Dämmplatte eine Gesamthöhe im Bereich von 6 bis 200 mm auf. Kleinere Gesamthöhen sind insbesondere im Innenbereich vorzuziehen. Die größeren Gesamthöhen werden in erster Linie im Außenbereich eingesetzt, wie beispielsweise beim Dämmen von Gebäudeaußenwänden.

Die Vorsprünge weisen vorteilhaft eine Höhe von nicht mehr als 8 mm auf, so dass eine sehr dünne Mörtelschicht ausreicht, um die Vorsprünge vollständig zu bedecken. Entsprechend wird für die Herstellung einer Dämmanordnung nur wenig Mörtelmaterial benötigt.

Bevorzugt wird der Untergrund durch eine Gebäudewand gebildet, wobei es sich bei dem Mörtel um einen Putzmörtel handelt.

Gemäß einer bevorzugten Ausgestaltung der erfindungsgemäßen Dämmanordnung sind die Dämmplatten unter Verwendung eines Klebstoffes, insbesondere unter Verwendung eines Klebemörtels, und/oder unter Verwendung von Dübeln an dem Untergrund befestigt.

Weitere Merkmale und Vorteile der vorliegenden Erfindung werden anhand der nachfolgenden Beschreibung einer Dämmplatte gemäß einer Ausführungsform der vorliegenden Erfindung unter Bezugnahme auf die beiliegende Zeichnung deutlich. Darin ist
Figur 1 eine schematische perspektivische Ansicht einer Dämmplatte gemäß einer Ausführungsform der vorliegenden Erfindung;
Figur 2 eine Draufsicht der in Figur 1 dargestellten Dämmplatte;
Figur 3 eine Schnittansicht der in Figur 1 dargestellten Dämmplatte entlang der Linie III-III in Figur 2; und
Figur 4 eine schematische Schnittansicht einer Dämmanordnung, die unter Verwendung mehrerer der in den Figuren 1 bis 3 dargestellten Dämmplatten hergestellt ist.

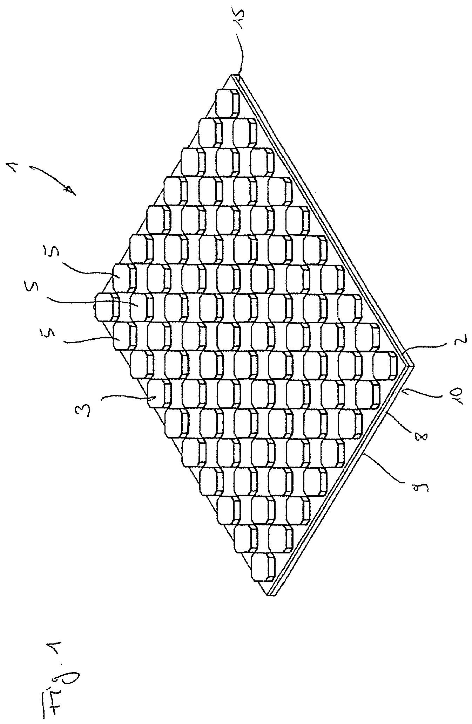

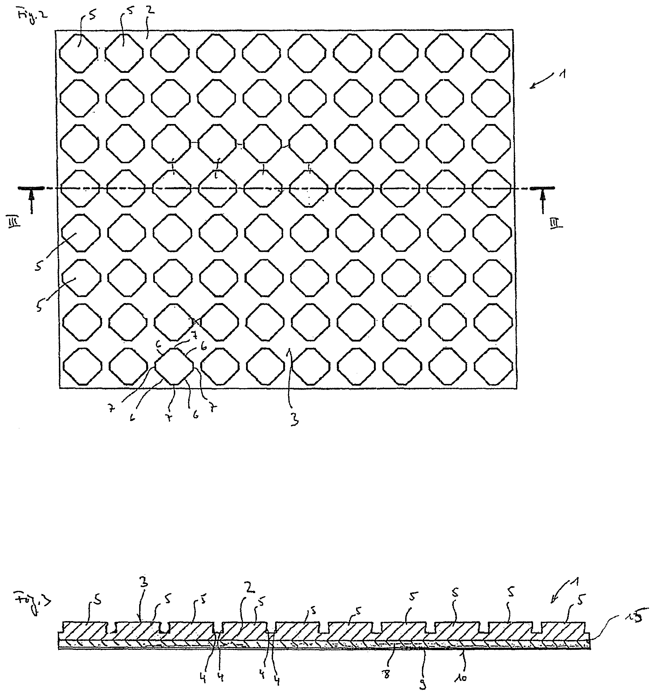

Die Figuren 1 bis 4 zeigen eine Dämmplatte 1 gemäß einer Ausführungsform der vorliegenden Erfindung, die zum thermischen und akustischen Dämmen eines Untergrunds dient, insbesondere einer Gebäudewand. Die Dämmplatte 1 umfasst eine erste Dämmschicht 2, die aus geschäumtem Kunststoff hergestellt ist und eine Oberseite 3 der Dämmplatte 1 definiert. Genauer gesagt ist die erste Dämmschicht 2 vorliegend aus extrudiertem oder in einer Form aufgeschäumtem Polystyrol gefertigt. Alternativ können aber beispielsweise auch Polyurethan oder Piocelan zum Einsatz kommen. Die erste Dämmschicht 2 umfasst eine Vielzahl von auswärts weisenden, mit umlaufenden oder teilweise umlaufenden Hinterschneidungen 4 versehenen Vorsprünge 5, die jeweils eine achteckige Form mit vier paarweise einander gegenüber liegenden längeren Seitenkanten 6 und vier paarweise einander gegenüberliegenden kürzeren Seitenkanten 7 aufweisen. Die Vorsprünge 5 sind in einer regelmäßigen Anordnung vorgesehen. Vorliegend bilden die Vorsprünge 5 eine durch Reihen und Spalten definierte Matrix mit mindestens 4 Vorsprüngen pro dm². Es sollte allerdings klar sein, dass grundsätzlich auch andere Anordnungen gewählt werden können. Die erste Dämmschicht 2 hat vorliegend eine Gesamthöhe h₁ von 9 mm, wobei die Vorsprünge 5 eine Höhe hᵥ von 6 mm aufweisen. Ferner umfasst die Dämmplatte 1 eine zweite Dämmschicht 8, die unterhalb der ersten Dämmschicht 2 angeordnet und an dieser befestigt ist. Die zweite Dämmschicht 8, die vorliegend eine vollständig eben ausgebildete Unterseite aufweist, ist ebenfalls aus geschäumtem Kunststoff hergestellt, vorliegend aus extrudiertem oder in einer Form aufgeschäumtem Polystyrol, wobei sich die Materialdichte der weiteren Dämmschicht 8 von der Materialdichte der ersten Dämmschicht 2 unterscheidet. Die erste Dämmschicht 2 und die weitere Dämmschicht 8 können getrennt voneinander hergestellt und im Anschluss stoffschlüssig oder unter Verwendung eines geeigneten Klebstoffes miteinander verbunden werden. Vorliegend wurden die erste Dämmschicht 2 und die weitere Dämmschicht 8 jedoch gemeinsam extrudiert oder zeitgleich in einer gemeinsamen Form aufgeschäumt. Die weitere Dämmschicht 8 weist eine Höhe h₂ von 3mm auf. Unterhalb der weiteren Dämmschicht 8 ist eine Vlies- oder Gewebeschicht 9 angeordnet und befestigt, welche eine Unterseite 10 der Dämmplatte 1 definiert.

Es sei darauf hingewiesen, dass die Dämmplatte 1 optional mit weiteren Schichten versehen werden, wie beispielsweise mit einer dritten Dämmschicht. Ferner weist die Dämmplatte 1 eine aus einer Metallfolie hergestellte Dampfsperrschicht 15 auf, die insbesondere zwischen der Dämmschicht 8 und der Vlies- oder Gewebeschicht 9 vorgesehen ist. Die Anordnung von zwei Dämmschichten 2 und 8, die sich hinsichtlich des Materials und/oder hinsichtlich der Materialdichte und/oder hinsichtlich der Druckstabilität voneinander unterscheiden, ist dahingehend von Vorteil, dass die erste Dämmschicht 2 beispielsweise derart ausgebildet sein kann, dass sie besonders gute thermische Dämmeigenschaften aufweist, und dass die zweite Dämmschicht 8 derart ausgebildet sein kann, dass sie besonders gute akustische Dämmeigenschaften hervorruft, oder umgekehrt. Die Vlies- oder Gewebeschicht 9 dient als Haftvermittlerschicht, damit sich die Dämmplatte 1 einfacher und besser unter Verwendung eines Klebstoffes, insbesondere unter Verwendung eines Klebemörtels, an einem Untergrund befestigen lässt. Die Vorsprünge 5 weisen bevorzugt eine Höhe von nicht mehr als 8 mm auf, damit nur wenig Mörtelmaterial erforderlich ist, um die Vorsprünge 5 zu bedecken, wenn auf der Oberseite 3 der Dämmplatte 1 eine Mörtelschicht aufgetragen wird, wie es nachfolgend noch näher erläutert ist. Die Gesamthöhe H der Dämmplatte kann in Abhängigkeit von den Anforderungen im Bereich von 8 bis 200 mm liegen.

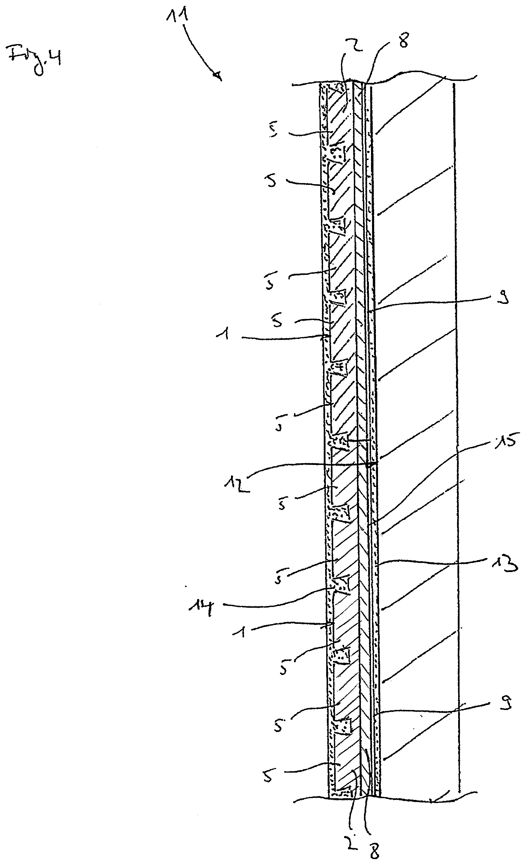

Figur 4 zeigt eine Dämmanordnung 11 mit einem Untergrund 12, bei dem es sich vorliegend um eine Gebäudewand handelt. An dem Untergrund 12 sind eine Vielzahl von Dämmplatten 1 unter Verwendung eines Klebemörtels 13 derart befestigt, dass sie den Untergrund 12 vollständig bedecken. Dabei verkrallt sich der Klebemörtel 13 in der Vlies- oder Gewebeschicht 9, wodurch eine sehr gute Befestigung erzielt wird. Die Auftragung des Klebemörtels 13 kann beispielsweise in Form von Raupen und/oder Mörtelbatzen oder vollflächig unter Verwendung einer Zahnkelle erfolgen. Zusätzlich zu dem Klebemörtel 13 können die Dämmplatten 1 auch unter Verwendung nicht näher dargestellter Dübel an dem Untergrund 12 gesichert sein. Übereinander angeordnete Dämmplatten 1 sind versetzt zueinander angeordnet, wodurch eine sehr gute Stabilität erzielt wird. An den Oberseiten 3 der Dämmplatten 1 ist eine Mörtelschicht 14 aufgetragen, wobei der Mörtel die Hinterschneidungen 4 der Vorsprünge 5 füllt und die Vorsprünge 5 überdeckt. Bei dem Mörtel kann es sich insbesondere um einen Innen- oder Außenputzmörtel handeln. Dank der mit den Hinterschneidungen 4 versehenen Vorsprünge 5 wird eine sehr gute mechanische Verbindung zwischen der Mörtelschicht 14 und der Dämmplatte 1 erzielt, weshalb auf die Anordnung eines zusätzlichen Bewehrungsgitters verzichtet werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### BEZUGSZEICHENLISTE

- 1: Dämmplatte
- 2: erste Dämmschicht
- 3: Oberseite
- 4: Hinterschneidung
- 5: Vorsprung
- 6: längere Seitenkante
- 7: kürzere Seitenkante
- 8: Dämmschicht
- 9: Vlies- oder Gewebeschicht
- 10: Unterseite
- 11: Dämmanordnung
- 12: Untergrund
- 13: Klebemörtel
- 14: Mörtelschicht
- 15: Dampfsperrschicht

## Patentansprüche

1. Verwendung einer Dämmplatte (1) zur Herstellung einer Dämmanordnung (11),
wobei es sich bei der Dämmplatte (1) um eine solche zum thermischen und/oder akustischen Dämmen eines Untergrunds (12) handelt und die Dämmplatte (1) eine erste Dämmschicht (2) aus geschäumtem Kunststoff, welche eine Oberseite (3) der Dämmplatte (1) definiert und auswärts weisende, mit Hinterschneidungen (4) versehene Vorsprünge (5) aufweist, die in einer regelmäßigen Anordnung vorgesehen sind, zumindest eine weitere Dämmschicht (8) aus geschäumtem Kunststoff, die mit der ersten Dämmschicht (2) verbunden ist, wobei sich die weitere Dämmschicht (8) von der ersten Dämmschicht (2) hinsichtlich des Materials und/oder hinsichtlich der Materialdichte unterscheidet, eine Dampfsperrschicht und an der der Oberseite (3) gegenüberliegenden Unterseite (10) eine Vlies- oder Gewebeschicht (9) umfasst, und
wobei die Dämmanordnung (11) einen Untergrund (12), mehrere der Dämmplatten (1), die mit ihrer Unterseite (10) an dem Untergrund (12) befestigt sind und diesen bedecken, und eine Mörtelschicht (14) aufweist, die auf die Oberseite (3) der Dämmplatten (1) aufgetragen ist, wobei der Mörtel die Hinterschneidungen (4) der Vorsprünge (5) füllt und die Vorsprünge (5) bedeckt.

2. Verwendung einer Dämmplatte (1) nach Anspruch 1, **dadurch gekennzeichnet, dass** die erste Dämmschicht (2) aus einem thermoplastischen Kunststoff hergestellt ist und/oder aus Polystyrol, Polyurethan oder Piocelan, insbesondere mittels Extrusion oder Aufschäumen in einer Form.

3. Verwendung einer Dämmplatte (1) nach einem der vorhergehenden Ansprüche, **dadurch gekennzeichnet, dass** mindestens 4 Vorsprünge (5) pro dm² vorgesehen sind, bevorzugt mindestens 10 Vorsprünge (5) pro dm².

4. Verwendung einer Dämmplatte (1) nach einem der vorhergehenden Ansprüche, **dadurch gekennzeichnet, dass** die Vorsprünge (5) in Draufsicht eine mehreckige Form aufweisen, insbesondere eine quadratische oder achteckige Form, wobei im letzteren Fall die Vorsprünge (5) bevorzugt vier paarweise einander gegenüberliegende längere Seitenkanten (6) und vier paarweise einander gegenüberliegenden kürzere Seitenkanten (7) aufweisen, wobei die kürzeren Seitenkanten (7) benachbart angeordneter Vorsprünge (5) vorteilhaft zueinander weisen.

5. Verwendung einer Dämmplatte (1) nach einem der vorhergehenden Ansprüche, **dadurch gekennzeichnet, dass** die weitere Dämmschicht (8) direkt mit der ersten Dämmschicht (2) verbunden ist.

6. Verwendung einer Dämmplatte (1) nach einem der vorhergehenden Ansprüche, **dadurch gekennzeichnet, dass** die weitere Dämmschicht (8) aus einem thermoplastisch verarbeitetem Kunststoff hergestellt ist und/oder aus Polystyrol, insbesondere aus extrudiertem oder in einer Form aufgeschäumten Polystyrol.

7. Verwendung einer Dämmplatte (1) nach einem der vorhergehenden Ansprüche, dass die Dampfsperrschicht (15) aus einer Folie, bevorzugt aus einer Metallfolie hergestellt ist.

8. Verwendung einer Dämmplatte (1) nach einem der vorhergehenden Ansprüche, **dadurch gekennzeichnet, dass** diese eine Gesamthöhe (H) im Bereich von 6 bis 200 mm aufweist.

9. Verwendung einer Dämmplatte (1) nach einem der Ansprüche 1-7, **dadurch gekennzeichnet, dass** die Vorsprünge (5) eine Höhe (hᵥ) von nicht mehr als 8 mm aufweisen.

10. Verwendung einer Dämmplatte (1) nach einem der vorhergehenden Ansprüche, **dadurch gekennzeichnet, dass** der Untergrund (12) durch eine Gebäudewand gebildet wird, und dass es sich bei dem Mörtel um einen Putzmörtel handelt.

11. Verwendung einer Dämmplatte (1) nach einem der vorhergehenden Ansprüche, **dadurch gekennzeichnet, dass** die Dämmplatten (1) unter Verwendung eines Klebstoffes, insbesondere unter Verwendung eines Klebemörtels (13), und/oder unter Verwendung von Dübeln an dem Untergrund (12) befestigt sind.

## Claims

1. Use of an insulation board (1) to manufacture an insulation arrangement (11), wherein the insulation board (1) is a board for thermally and/or acoustically insulating a base (12) and the insulation board (1) has a first insulation layer (2) made from foamed plastic, which constitutes an upper side (3) of the insulation board (1), and outwardly pointing lugs (5) provided with undercuts (4) and arranged in a regular pattern, at least one further insulation layer (8) made from foamed plastic which is joined to the first insulation layer (2), wherein the further insulation layer (8) differs from the first insulation layer (2) in terms of the material and/or in terms of the density of the material, a vapor barrier layer and a fleece or textile layer (9) on the underside (10) opposite the upper side (3); and
wherein the insulation arrangement (11) has a base (12), a plurality of the insulation boards (1), the undersides (10) of which are attached to the base (12), thereby covering the latter, and a mortar layer (14) which is applied to the upper side (3) of the insulation boards (1), whereby the mortar fills the undercuts (4) of the lugs (5) and covers the lugs (5).

2. Use of an insulation board (1) in accordance with claim 1, **characterised in that** the first insulation layer (2) is manufactured from a thermoplastic plastic and/or from polystyrene, polyurethane or Piocelan, in particular by means of extrusion or foaming in a mould.

3. Use of an insulation board (1) in accordance with one of the preceding claims, **characterised in that** that at least 4 lugs (5) per dm² are provided, preferably at least 10 lugs (5) per dm².

4. Use of an insulation board (1) according to one of the preceding claims, **characterised in that** the lugs (5) as seen from above have a polygonal shape, in particular a quadratic or octagonal shape, wherein in the latter case the lugs (5) preferably have four longer side edges (6) arranged in pairs opposite each other and four shorter side edges (7) arranged in pairs opposite each other, whereby the shorter side edges (7) of the lugs (5) located next to each other are advantageously facing each other.

5. Use of an insulation board (1) according to one of the preceding claims, **characterised in that** the further insulation layer (8) is joined directly to the first insulation layer (2).

6. Use of an insulation board (1) according to one of the preceding claims, **characterised in that** the further insulation layer (8) is manufactured from a thermoplastically worked plastic and/or from polystyrene, in particular from extruded polystyrene or polystyrene foamed into a mould.

7. Use of an insulation board (1) according to one of the preceding claims, **characterised in that** the vapor barrier layer (15) is made from a film, preferably from a metal foil.

8. Use of an insulation board (1) according to one of the preceding claims, **characterised in that** this board has an overall height (H) within a range from 6 mm to 200 mm.

9. Use of an insulation board (1) according to one of claims 1-7, **characterised in that** the lugs (5) have a height (h_{lug}) of no more than 8 mm.

10. Use of an insulation board (1) according to one of the preceding claims, **characterised in that** the base (12) is formed by a building wall and the mortar is stuff.

11. Use of an insulation board (1) according to one of the preceding claims, **characterised in that** the insulation boards (1) are attached to the base (12) using an adhesive, in particular using an adhesive mortar (13), and/or using dowels.

## Revendications

1. Utilisation d'un panneau isolant (1) pour créer une configuration isolante (11),
le panneau isolant (1) en étant un de la sorte qui est apte à assurer l'isolation thermique et/ou acoustique d'un support (12) et le panneau isolant (1) comportant une première couche isolante (2) en matière plastique expansée, laquelle définit une face supérieure (3) du panneau isolant (1) et comporte des saillies (5) dirigées vers l'extérieur, munies de contre-dépouilles (4) qui sont prévues pour être disposées régulièrement, au moins une couche isolante (8) supplémentaire en matière plastique expansée, qui est reliée avec la première couche isolante (2), la couche isolante (8) supplémentaire se différenciant de la première couche isolante (2) au niveau de la matière et/ou au niveau de la densité de la matière, une couche pare-vapeur et sur la face inférieure (10) opposée à la face supérieure (3), une couche de non-tissé ou tissu (9), et
la configuration isolante (11) comportant un support (12), plusieurs des panneaux isolants (1), qui par leur face inférieure (10) sont fixés sur le support (12) et recouvrent celui-ci, et une couche de mortier (14), qui est appliquée sur la face supérieure (3) des panneaux isolants (1), le mortier remplissant les contre-dépouilles (4) des saillies (5) et recouvrant les saillies (5).

2. Utilisation d'un panneau isolant (1) selon la revendication 1, **caractérisée en ce que** la première couche isolante (2) est créée en une matière thermoplastique et/ou en polystyrène, en polyuréthane ou en PIOCELAN, notamment par extrusion ou moussage dans un moule.

3. Utilisation d'un panneau isolant (1) selon l'une quelconque des revendications précédentes, **caractérisée en ce qu'**au moins 4 saillies (5) par dm², de préférence au moins 10 saillies (5) pro dm² sont prévues.

4. Utilisation d'un panneau isolant (1) selon l'une quelconque des revendications précédentes, **caractérisée en ce que**, vues en élévation, les saillies (5) ont une forme polygonale, notamment une forme quadratique ou octogonale, dans le dernier cas, les saillies (5) comportant de préférence quatre arêtes latérales (6) plus longues, et quatre arêtes latérales (7) plus courtes, mutuellement opposées par paires, les arêtes latérales (7) plus courtes de saillies (5) placées au voisinage étant de préférence dirigées les unes vers les autres.

5. Utilisation d'un panneau isolant (1) selon l'une quelconque des revendications précédentes, **caractérisée en ce que** la couche isolante (8) supplémentaire est directement reliée avec la première couche isolante (2).

6. Utilisation d'un panneau isolant (1) selon l'une quelconque des revendications précédentes, **caractérisée en ce que** la couche isolante (8) supplémentaire est créée en une matière plastique susceptible d'être traitée par voie thermoplastique et/ou en polystyrène, notamment en polystyrène extrudé ou moussé dans un moule.

7. Utilisation d'un panneau isolant (1) selon l'une quelconque des revendications précédentes, **caractérisée en ce que** la couche pare-vapeur (15) est créée en un film, notamment en un film métallique.

8. Utilisation d'un panneau isolant (1) selon l'une quelconque des revendications précédentes, **caractérisée en ce que** celle-ci présente une hauteur hors tout (H) de l'ordre de 6 à 200 mm.

9. Utilisation d'un panneau isolant (1) selon l'une quelconque des revendications 1 à 7, **caractérisée en ce que** les saillies (5) présentent une hauteur (hᵥ) de pas plus de 8 mm.

10. Utilisation d'un panneau isolant (1) selon l'une quelconque des revendications précédentes, **caractérisée en ce que** le support (12) est un mur de bâtiment et **en ce que** le mortier est un enduit.

11. Utilisation d'un panneau isolant (1) selon l'une quelconque des revendications précédentes, **caractérisée en ce que** les panneaux isolants (1) sont fixés sur le support (12) par utilisation d'un agent adhésif, notamment par utilisation d'un mortier-colle (13), et/ou par utilisation de chevilles.
